# EUROPEAN PATENT APPLICATION

(11) **EP 4 811 932 A1**
(43) Date of publication of application: **23.09.2026**
(21) Application number: 26164917.2
(22) Date of filing: 16.03.2026
(51) Int. Cl.: H05B 6/64, A47J 36/02, B65D 81/34

(54) **MICROWAVE HEATING FILM AND METHOD FOR MANUFACTURING MICROWAVE HEATING FILM**

(30) Priority: 21.03.2025 JP 2025047554; 26.12.2025 JP 2025283426
(71) Applicant: Ricoh Company, Ltd., Tokyo 143-8555 (JP)
(72) Inventor: Ishimi, Tomomi, Tokyo, 143-8555 (JP); Fujisawa, Hiroki, Tokyo, 143-8555 (JP); Yukimoto, Shun, Tokyo, 143-8555 (JP)
(74) Representative: SSM Sandmair

(57) **Abstract**

A microwave heating film is provided that includes a first resin film (1), a microwave reception layer (3) over the first resin film (1), and one or more heat generation layers (2) in contact with the microwave reception layer (3). The microwave reception layer (3) includes a metallic particle and has a resistivity of 7.0 × 10⁻⁵ Ω·m or less. The one or more heat generation layers (2) have a resistivity of 1.6 × 10⁻⁵ Ω·m to 8.0 × 10⁻³ Ω·m.

## Description

### BACKGROUND

### Technical Field

The present disclosure relates to a microwave heating film and a method for manufacturing a microwave heating film.

### Related Art

A package containing a food material may be heated and cooked in a microwave oven while the food material is sealed therein. Therefore, by using a microwave heating composition including a microwave heating material that generates heat with microwaves in the package, it is possible to allow the steam from the food material heated by microwaves to escape from the package and to allow the package to exhibit a steam passage property.

Examples of a measure for allowing the steam to escape from the package include a method for providing an opening in a heat-sealed portion or an upper portion of the package.

As a method for providing an opening in a heat-sealed portion or an upper portion of a package, there is a method for providing a coating layer that generates heat by microwaves on a film-like microwave heating package covering a container, and there is a disclosed microwave heating package in which a part of the microwave heating package is melted by heat generation of the coating layer by microwave irradiation to form an opening, through which the steam is released (see, for example, Japanese Patent No. 6713797).

Further, there is a disclosed microwave processing package in which a heating portion includes a first layer portion including carbon black and a second layer portion that is superimposed on the first layer portion and includes vapor-deposited aluminum flakes (see, for example, Japanese Unexamined Patent Application Publication No. 2021-039944).

### SUMMARY

An object of the present invention is to provide a microwave heating film that has a stable steam passage property and can prevent the film from falling after steam passage.

Embodiments of the present invention provide a microwave heating film that includes a first resin film, a microwave reception layer over the first resin film, and one or more heat generation layers in contact with the microwave reception layer. The microwave reception layer includes a metallic particle and has a resistivity of 7.0 × 10⁻⁵ Ω·m or less. The one or more heat generation layers have a resistivity of 1.6 × 10⁻⁵ Ω·m to 8.0 × 10⁻³ Ω·m.

Embodiments of the present invention provide a method for manufacturing the above microwave heating film. The method includes: forming the microwave reception layer over the first resin film; and forming the one or more heat generation layers in contact with the microwave reception layer over the first resin film.

According to an aspect of the present invention, a microwave heating film that has a stable steam passage property and can prevent the film from falling after steam passage is provided.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic side view of a container including a microwave heating film according to an embodiment of the present invention and a food material;
FIG. 2A is a schematic cross-sectional view of a microwave heating film according to an embodiment of the present invention;
FIG. 2B is a schematic cross-sectional view of a microwave heating film according to an embodiment of the present invention;
FIG. 3 is a schematic top view of a microwave heating film according to an embodiment of the present invention;
FIG. 4A is a schematic cross-sectional diagram illustrating shapes and dimensions of a microwave reception layer and a heat generation layer in a microwave heating film according to an embodiment of the present invention;
FIG. 4B is a schematic cross-sectional diagram illustrating shapes and dimensions of a microwave reception layer and a heat generation layer in a microwave heating film according to an embodiment of the present invention;
FIG. 4C is a schematic cross-sectional diagram illustrating shapes and dimensions of a microwave reception layer and a heat generation layer in a microwave heating film according to an embodiment of the present invention;
FIG. 4D is a schematic cross-sectional diagram illustrating shapes and dimensions of a microwave reception layer and a heat generation layer in a microwave heating film according to an embodiment of the present invention;
FIG. 5 is a schematic side view of a container including a microwave heating film according to an embodiment of the present invention and a food material;
FIG. 6A is a schematic cross-sectional diagram illustrating shapes and dimensions of a microwave reception layer and a heat generation layer in a microwave heating film according to an embodiment of the present invention used in Examples and Comparative Examples;
FIG. 6B is a schematic cross-sectional diagram illustrating shapes and dimensions of a microwave reception layer and a heat generation layer in a microwave heating film according to an embodiment of the present invention used in Examples and Comparative Examples;
FIG. 6C is a schematic cross-sectional diagram illustrating shapes and dimensions of a microwave reception layer and a heat generation layer in a microwave heating film according to an embodiment of the present invention used in Examples and Comparative Examples;
FIG. 6D is a schematic cross-sectional diagram illustrating shapes and dimensions of a microwave reception layer and a heat generation layer in a microwave heating film according to an embodiment of the present invention used in Examples and Comparative Examples; and
FIG. 7 is a schematic side view of a container illustrating adhesion of a food material in Comparative Example 4, Example 9, and Example 10.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, an embodiment of the present invention will be described in detail.

In the present disclosure, "steam passage" means that a steam port (also referred to as a steam passage port or a steam passage hole in the present specification) is formed.

Conventionally, foods to be heat-treated are sold in convenience stores, supermarkets, and the like, and it is desirable to seal the foods for long-term storage. As a sealing method, a food is put in a plastic container made of polypropylene (PP) or the like, and the container is heat-sealed with a top seal film so that the container can be easily sealed. However, when the food is heat-treated in a microwave oven, moisture is generated from the food material, and thus the internal pressure increases due to sealing, which causes problems such as container deformation and container rupture.

Therefore, according to an embodiment of the present invention, there is a proposed method for converting energy into heat by using microwave energy of a microwave oven and forming a steam passage port in a top seal film. When microwaves are applied to a microwave reception layer, a current flows around the microwave reception layer, and a part of the current flows through a heat generation layer in contact with the microwave reception layer, and thus the heat generation layer having resistance generates heat by Joule heat (corresponding to R × I², where R is resistance and I is current), a resin film or the like in contact with the heat generation layer is softened and contracted due to heat transfer to form a hole, and the hole serves as a steam passage port. Here, the resistivity is preferably in a suitable range so that a current flows through the heat generation layer and heat is generated. The heat generation layer is desirably in direct or indirect (for example, via a design print layer) contact with the film to transfer heat in order to form a hole.

On the other hand, in manufacturing of the film according to one embodiment of the present invention, the microwave reception layer and the heat generation layer are formed separately, and therefore, for example, in gravure printing, a relative positional deviation may occur.

Therefore, in order to ensure the contact between the microwave reception layer and the heat generation layer, a portion where the microwave reception layer and the heat generation layer overlap with each other is provided so that the above issue may be avoided. The amount of the overlapping portion is preferably about 1 mm to 2 mm. A hole is not formed in the overlapping portion because a current easily flows in the microwave reception layer and heat is also radiated.

When the steam port is formed by this method, it is better to receive a large amount of microwaves and convert the microwaves into thermal energy in order to ensure the steam passage property, but on the contrary, a large amount of heat is applied to the film so that the film may be broken and fall on the food, and particularly in the use of the food, it is preferable to avoid falling of broken pieces.

The microwave generated from the microwave oven is an electromagnetic field, and when the microwave reception layer containing metallic particles is irradiated with the microwave, a current flows in accordance with the area of the microwave reception layer, and the heat generation layer in contact with the microwave reception layer generates heat due to the resistance caused by the current flow. By lowering the resistivity of the microwave reception layer, the temperature does not rise and deformation of the resin film can be suppressed, and by setting the resistivity of the heat generation layer to a predetermined range, a current flows stably and stable heat generation is possible, and thus problems such as container deformation and burns due to container rupture can be suppressed due to stable formation of the steam passage port, and the size of the steam passage port is controlled by locally heating the resin film so that both prevention of liquid leakage through the steam passage port and formation of the steam passage port can be achieved.

There is a concern about the effect on the human body due to the contact between the food material and the microwave reception layer and the heat generation layer, and therefore, by laminating the microwave reception layer and the heat generation layer with a film, the microwave reception layer and the heat generation layer do not come into contact with the food and the human body, and it is possible to suppress the influence of scratches and impacts during transportation and layer breakage due to adhesion of solvents such as water and alcohol, and to secure stable steam passage.

In addition, according to one embodiment of the present invention, the microwave heating film is removed from the food container in order to eat the food after heating the food in a microwave oven, and by using a film subjected to an easy-peel treatment as one of heat seals on a surface in contact with the container, both sealing performance and easy removal can be achieved.

There is a problem such that a food material adheres to a microwave heating film due to vibration in conveyance of a container containing the food material, boiling in microwave heating, or the like, and the burned food material due to heating, light generation, and odor due to the light generation occur in a steam passage portion during steam passage, and it is difficult to form a steam passage port due to obstruction of steam passage by the food material and thus an internal pressure is increased, which results in container deformation and container rupture.

By imparting water repellency and oil repellency so that food does not adhere to the microwave heating film, the food can fall even when the food comes into contact with the film, and therefore, by applying water repellent finish and oil repellent finish to the food side of the microwave heating film, adhesion of the food is suppressed, and the problem can be improved.

Water may adhere to a top seal film due to storage in a refrigerator or a freezer or handling by a customer when the food is put in a container, thermally fused with the container by the top seal film and sold as a product. It has been found out that, when the microwave reception layer according to an embodiment of the present invention is heated in a microwave oven in a state where water adheres to the microwave reception layer via a film, an excessive current flows through the microwave reception layer, and the microwave reception layer sparks and is broken. It has been found out that the resin film is also damaged by the breakage and the microwave reception layer falls onto the food material through the steam passage port, and as a result of considerations on how to suppress the problem, it has been found out that the problem is suppressed by increasing the film thickness of the microwave reception layer, reducing the resin ratio, and reducing the area formed by the microwave reception layer, but it has been found out that the film thickness is difficult in production, and when the resin ratio is reduced, it is difficult to secure the binding property with the resin film, and when the area is reduced, it is difficult to receive sufficient microwaves and form the steam passage port.

In the study of the inventors of the present invention, it has been found out that this breakage occurs when α = D/√S/R is small, and by setting D, R, and S that satisfy α ≥ 1.8 × 10⁻⁴ within a range in which the steam passage property is secured, instead of setting by each parameter, it is possible to prevent the falling of broken pieces while maintaining the suppression of problems such as container deformation and burns due to container rupture.

It has been found out that, in a case where the microwave reception layer is broken due to heating in a microwave oven in a state where water adheres to the microwave reception layer via the film, even when the area surrounded by the microwave reception layer is the same, the larger area where the microwave reception layer is formed causes the film to be broken and causes broken pieces to fall. In order to reduce the area where the microwave reception layer is formed while the area surrounded by the microwave reception layer is the same, the microwave reception layer is formed in a hollow structure so that the amount of falling broken pieces can be reduced while maintaining the steam passage property.

In addition, it is possible to reduce costs by reducing the area formed.

The area in a rectangular shape of 9 mm × 20 mm is 180 mm², but the area in a hollow structure with a frame width W of 2 mm is 100 mm² and the area with the frame width W of 1 mm is 54 mm², so that the area can be reduced and the amount of falling broken pieces can be largely suppressed. When the frame width is too small, there is a risk of formation failure due to printing blur in the case of formation by gravure printing, and therefore, the frame width is preferably 1 mm or more.

When the microwave heating film is heated by microwave oven heating, a current flows around the microwave reception layer, and there is no place for the current to flow on the side without the heat generation layer. Therefore, when the microwave reception layers on the sides without the heat generation layer are arranged close to each other, the microwave reception layer gets broken due to sparks, and there is a risk of falling of broken pieces, and thus the microwave reception layers are preferably not arranged adjacent to each other. When the microwave reception layers are arranged adjacent to each other, the distance between the microwave reception layers on the sides without the heat generation layer is preferably at least twice or more the distance between the microwave reception layers on the sides with the heat generation layer.

Depending on the type of the resin film used, problems such as a light generation phenomenon, odor, and falling of broken pieces after the formation of the steam passage port are confirmed, and it has been found out that the value of the arc resistance of the resin film affects the occurrence of the problems.

It is considered that, when the microwave heating film is heated by microwave oven heating, a current flows around the microwave reception layer, and an arc occurs due to division of the metal of the microwave reception layer by the formation of the steam passage port, so that the above problem occurs in the resin film that cannot withstand an arc. It is desirable to avoid the risk of a light generation phenomenon, odor, and falling of broken pieces on the food, and the above problem can be suppressed by using a resin film having high arc resistance.

Even in the case of a material having high arc resistance, a resin film having a benzene ring is particularly odorous after the steam passage port is formed and is not suitable for food, but the problem of odor can be suppressed by using a microwave resin film that does not include a material having a benzene ring.

When a design print layer is formed in the portion where the steam passage port is formed, the heat generation layer is heated by heating in a microwave oven and the temperature rises, and depending on the material of the design print layer, there is a risk of falling of broken pieces of the design print layer in the steam passage portion on the food material, such as a burn due to container deformation or container rupture of the steam passage port due to impairment of the steam passage property. However, with the configuration according to the present disclosure, the design effect can be minimized and the above risk can be suppressed.

Since the resin component ratio is lowered in order to suppress breakage of the microwave reception layer due to adhesion of water onto the film, the binding property with a resin film 1 may be lowered. Therefore, the binding property can be improved by forming the design print layer between the resin film 1 and the microwave reception layer.

In the production of the microwave heating film, each layer is formed by gravure printing and wound by a roll. However, there is a risk of peeling (blocking) due to the printed surface being pressed against the opposite surface of the film, but this risk can be suppressed by the measures according to the present disclosure.

### <Microwave Heating Film>

A microwave heating film according to an embodiment of the present invention will be described.

The microwave heating film includes a film substrate, a microwave reception layer, and a heat generation layer, and may further include a sealant, an adhesive layer, a printing ink layer, an anchor coat layer, an overcoat layer, and other layers as appropriate.

As a conventional microwave heating technique, it is disclosed that only a single heat generation layer is provided. However, most of the microwave is absorbed by the food material depending on the amount of the food material, and thus the amount of the microwave applied to the heat generation layer is reduced, so that there is a problem in that it is difficult to provide a steam passage port.

Depending on the resistance value of a conductive material, a short circuit may occur and a fire may occur, which poses a safety problem.

In addition, a package containing a food material is heated and cooked in a microwave oven with the food material sealed inside, and it is desirable to achieve both a stable steam passage property for ensuring safety (suppression of container deformation and container rupture) to the human body during the heating process and suppression of falling of broken pieces onto the food material.

There are problems such that, when the size of the steam passage port is small, the steam cannot be sufficiently discharged and the container is deformed, and when the size is large, the liquid of the food material leaks (when the container containing the food material is put in a bag and inclined after steam passage, the food material leaks and the bag gets stained). Therefore, in order to maintain a stable steam passage property, it is desirable to control the size of the steam passage port. The size of the steam passage port is preferably 0.2 mm² to 20 mm².

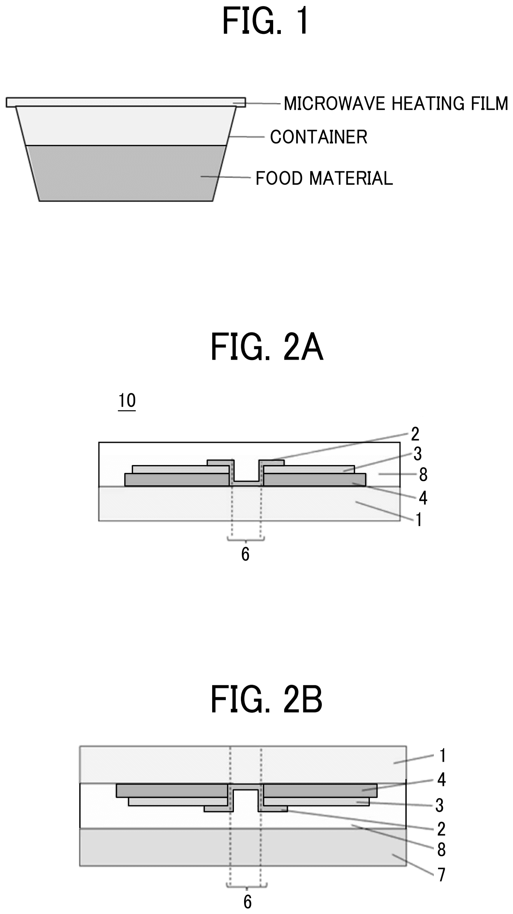

FIG. 1 is a side view of a microwave heating film according to an embodiment of the present invention.

As illustrated in FIG. 1, a microwave heating film according to an embodiment of the present invention is attached to a flange of a container containing a food material to seal the container.

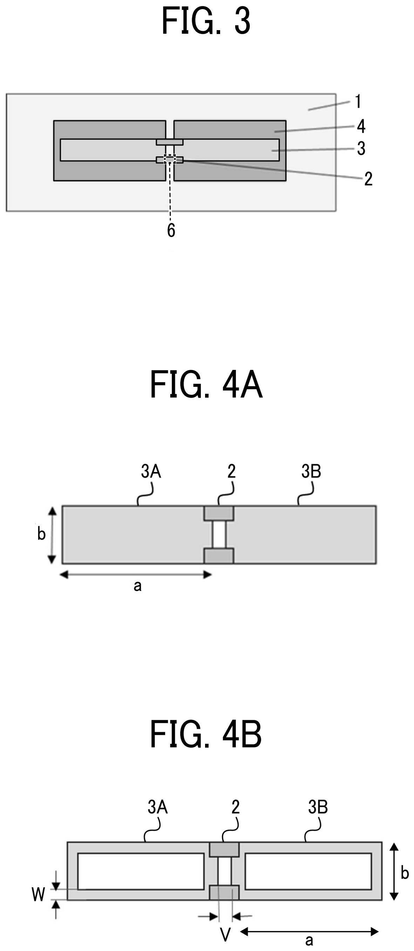

FIG. 2A is a schematic cross-sectional view of a microwave heating film according to an embodiment of the present invention, and FIG. 3 is a schematic top view of the microwave heating film according to an embodiment of the present invention.

As illustrated in FIGS. 2A and 3, a microwave heating film 10 includes a film substrate 1, a heat generation layer 2, a microwave reception layer 3, a print layer 4, and an overcoat layer 8. When the microwave heating film 10 is heated, a steam passage port 6 is formed as illustrated in FIG. 2A. In FIG. 2A, a surface of the film substrate 1 over which the microwave reception layer and the heat generation layer are not formed may have at least one of heat sealing finish, water repellent finish, and oil repellent finish.

FIG. 2B is a schematic cross-sectional view of a microwave heating film according to another embodiment of the present invention.

As illustrated in FIG. 2B, the microwave heating film 10 further includes a second resin film 7. In the microwave heating film illustrated in FIG. 2B, a surface of the second resin film 7 which is opposite to the surface facing the microwave reception layer 3 and the heat generation layer 2 formed over the first resin film 1 may have at least one of heat sealing finish, water repellent finish, and oil repellent finish.

FIG. 4A is a schematic cross-sectional diagram illustrating the shapes and dimensions of the microwave reception layer 3 and the heat generation layer 2 in the microwave heating film according to an embodiment of the present invention. As illustrated in FIG. 4A, the microwave heating film 10 has a structure in which the microwave reception layers 3 each having a rectangular shape with a long side a and a short side b are adjacent to each other such that the short sides face each other. To be specific, the short side b of a first microwave reception layer 3A and the short side b of a second microwave reception layer 3B are arranged to face each other and are connected via the two heat generation layers 2 on the respective short sides b.

FIG. 4B is a schematic cross-sectional diagram illustrating the shapes and dimensions of the microwave reception layer 3 and the heat generation layer 2 in the microwave heating film according to another embodiment of the present invention. In the microwave heating film illustrated in FIG. 4B, the microwave reception layer 3 in the microwave heating film illustrated in FIG. 4A is replaced with that having a hollow structure. As illustrated in FIG. 4B, the hollow structure refers to a structure in which the rectangular microwave reception layer 3 is formed of sides having a width of W, and the microwave reception layer is not formed on the inner side of the layer in a plan view.

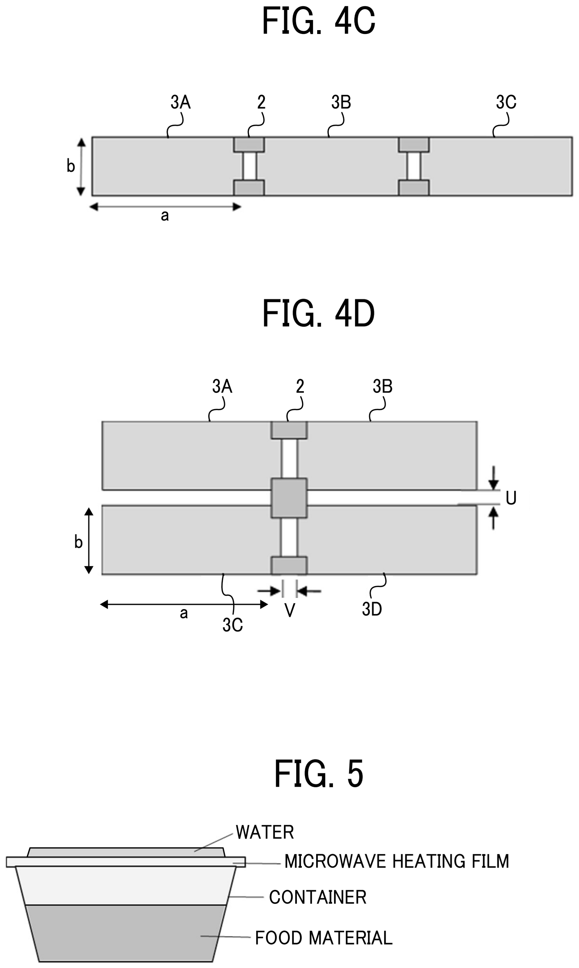

FIG. 4C is a schematic cross-sectional diagram illustrating the shapes and dimensions of the microwave reception layer 3 and the heat generation layer 2 in the microwave heating film according to another embodiment of the present invention. The microwave heating film illustrated in FIG. 4C further includes a third microwave reception layer 3C in addition to the microwave heating film illustrated in FIG. 4A, and the short side b of the second microwave reception layer 3B and the short side b of the third microwave reception layer 3C are arranged to face each other and are connected via the two heat generation layers 2 on the respective short sides b.

FIG. 4D is a schematic cross-sectional diagram illustrating the shapes and dimensions of the microwave reception layer 3 and the heat generation layer 2 in the microwave heating film according to another embodiment of the present invention. The microwave heating film illustrated in FIG. 4D further includes the third microwave reception layer 3C and a fourth microwave reception layer 3D in addition to the microwave heating film illustrated in FIG. 4A, and the long side a of the first microwave reception layer 3A and the long side a of the third microwave reception layer 3C are arranged to face each other with a distance U.

The long side a of the second microwave reception layer 3B and the long side a of the fourth microwave reception layer 3D are arranged to face each other with the distance U. Here, the distance U is twice or more a distance V between the short side b of the first microwave reception layer 3A and the short side b of the second microwave reception layer.

According to another embodiment of the present invention illustrated in FIG. 4D, the fourth microwave reception layer 3D is provided, but the fourth microwave reception layer 3D may be omitted.

### [Heat Generation Layer]

The heat generation layer is a layer that converts the eddy current converted by the microwave reception layer into Joule heat. Microwaves are radio waves having frequencies of 300 MHz or more and 300 GHz or less.

### [Microwave Reception Layer]

The microwave reception layer is a layer that absorbs microwave energy and converts the microwave energy into an eddy current.

The microwave reception layer includes a conductive material and further includes other components as appropriate.

The resistivity of the microwave reception layer is 7.0 × 10⁻⁵ Ω·m or less. The resistivity of the microwave reception layer is preferably a lower value and is preferably 7.0 × 10⁻⁶ Ω·m or less to prevent film deformation, breakage (cracking or the like) of the microwave reception layer, and falling of a molten film due to heat generation caused by an excessive current in the microwave reception layer.

A method for measuring the resistance value is not particularly limited and may be appropriately selected depending on the intended purpose. For example, the resistance value can be measured using a two-terminal resistance measuring device (tester) or a four-terminal resistance measuring device.

### (Conductive Material of Microwave Reception Layer)

The conductive material is not particularly limited and may be appropriately selected depending on the intended purpose. Examples thereof include, but are not limited to, nonmetallic inorganic materials such as carbon black and graphite, metals such as gold, silver, copper, aluminum, zinc, tin, and iron, an alloy thereof or a metal oxide thereof, organic materials such as thiophene system, aniline system, and pyrrole system. Among these, from the viewpoint of conductivity, a metal, an alloy, or a metal oxide is preferable, and a metal is more preferable. Further, gold, silver, and copper are preferable among metals.

The shape of the conductive material is preferably a particle shape from the viewpoint of preventing the occurrence of a short circuit due to an excessive current flow. In addition, since the conductive material has a particle shape, ink formation is easy.

The length mean diameter of the conductive material in the number-based distribution is not particularly limited and may be appropriately selected depending on the intended purpose, but is preferably 10 µm or less. When the length mean diameter in the number-based distribution is 10 µm or less, the resistance value of the microwave reception layer can be easily controlled to an appropriate value.

In addition, the number of contacts between particles for exhibiting conductivity increases, and thus desirable conductivity can be obtained.

A method for measuring the length mean diameter in the number-based distribution is not particularly limited and may be appropriately selected depending on the intended purpose. For example, the length mean diameter can be determined from the shape of the conductive material observed from a cross section of the microwave reception layer.

The cross section can be observed, for example, by preparing a sample by an ordinary method and measuring the cross section with a transmission electron microscope (TEM).

Since the measurement value of the length mean diameter in the number-based distribution of the conductive material in the observation using the TEM substantially coincides with the measurement value of the length mean diameter in the number-based distribution of the conductive material of the microwave reception layer forming composition used for forming the microwave reception layer, the particle size distribution of the conductive material after the microwave reception layer is formed can be set by the particle size distribution of the conductive material in the microwave reception layer forming composition.

The length mean diameter in the volume-based distribution of the conductive material in the microwave reception layer forming composition can be measured by, for example, a laser diffusion method using LA-960 manufactured by Horiba, Ltd.

The content of the conductive material is not particularly limited and can be appropriately selected depending on the intended purpose, but the content thereof is preferably 50% by mass or more and 99% by mass or less with respective to the microwave reception layer. When the content of the conductive material is 50% by mass or more, microwaves can be sufficiently absorbed, so that an eddy current for heat generation in the heat generation layer can be generated. When the content of the conductive material is 99% by mass or less, a short circuit of the microwave heating film can be prevented by suppressing the generation of an excessive eddy current in the microwave reception layer.

### (Other Components)

The other components are not particularly limited and may be appropriately selected depending on the intended purpose. Examples thereof include, but are not limited to, a resin, a coloring material, a wax, a pigment dispersant, and a cross-linking agent.

The resin is not particularly limited as long as the resin does not inhibit the microwave absorbing property, and may be appropriately selected depending on the purpose such as the film substrate, the use, and the configuration. Examples thereof include, but are not limited to, shellacs, rosins, soluble nitrocellulose, celluloses, rubbers, polyamide resins, vinyl chloride-vinyl acetate copolymers, polyester resins, polyvinylidene chloride resins, ketone resins, butyral resins, chlorinated polypropylene resins, chlorinated polyethylene resins, chlorinated ethylene vinyl acetate resins, ethylene vinyl acetate resins, acrylic resins, urethane resins, casein, alkyd resins, polyvinyl alcohol resins, ethylene-vinyl alcohol resins, and vinyl chloride resins. Among these, acrylic resins, urethane resins, vinyl chloride resins, and rubbers are preferable from the viewpoint of adhesiveness to the film substrate.

The coloring material is not particularly limited and may be appropriately selected depending on the intended purpose. Examples thereof include, but are not limited to, pigments, dyes, and mixtures thereof. Among these, pigments are preferable from the viewpoint of durability.

The pigments are not particularly limited and may be appropriately selected depending on the intended purpose. Examples thereof include, but are not limited to, inorganic pigments such as titanium oxide, red iron oxide, barium sulfate, calcium carbonate, silica, zinc oxide, zinc sulfide, mica, talc, pearl, aluminum, and carbon black, organic pigments such as phthalocyanine system, insoluble azo system, condensed azo system, dioxazine system, anthraquinone system, quinacridone system, perylene system, perinone system, and thioindigo system, and various other pigments such as fluorescent pigments, metal powder pigments, and extender pigments. These materials may be used alone or in combination of two or more kinds thereof.

The dye is preferably dissolved or dispersed in a solvent, and may be used alone or in combination of two or more kinds thereof. The coloring material may be included, which is very useful in terms of color variation and design.

The pigment dispersant is not particularly limited and may be appropriately selected depending on the intended purpose. Examples thereof include, but are not limited to, an anionic surfactant, a cationic surfactant, and a nonionic surfactant. These materials may be used alone or in combination of two or more kinds thereof.

The cross-linking agent is not particularly limited and may be appropriately selected depending on the intended purpose. Examples thereof include, but are not limited to, hydrazide system, isocyanate system, epoxy system, carbodiimide system, silane coupling system, oxazoline system, aziridine system, imine system, metal chelate system, glyoxal system, and methylol system. These materials may be used alone or in combination of two or more kinds thereof. Among these, isocyanate system, carbodiimide system, epoxy system, and aziridine system are preferable.

### [Heat Generation Layer]

The heat generation layer is a layer that converts the eddy current converted by the microwave reception layer into Joule heat. The resistance value of the heat generation layer may be a value higher than the resistance value of the microwave reception layer, and is preferably more than 250 Ω. The resistance value can be measured by using the same method as that for the resistance value of the microwave reception layer.

The heat generation layer includes a conductive material and a resin and further includes other components as appropriate. The heat generation layer includes a conductive material and thus has conductivity.

The resistivity of the heat generation layer is 1.6 × 10⁻⁵ Ω·m or more and 8.0 × 10⁻³ Ω·m or less. When the resistivity of the heat generation layer is 1.6 × 10⁻⁵ Ω·m or more and 8.0 × 10⁻³ Ω·m or less, film deformation, breakage (cracking or the like) of the microwave reception layer, and falling of the molten film due to heat generation caused by an excessive current in the microwave reception layer can be prevented.

### (Conductive Material)

The conductive material is not particularly limited and may be appropriately selected depending on the intended purpose. Examples thereof include, but are not limited to, nonmetallic inorganic materials such as carbon black and graphite, metals such as gold, silver, copper, aluminum, zinc, tin, and iron, an alloy thereof or a metal oxide thereof, organic materials such as thiophene system, aniline system, and pyrrole system. Among these, from the viewpoint of the resistance value, nonmetallic inorganic materials or organic materials are preferable, organic materials are more preferable, and the thiophene system is particularly preferable.

Among the thiophene system, poly(3,4-ethylenedioxythiophene) (PEDOT) is preferable from the viewpoint of conductivity.

The conductive material is preferably in the form of particles or in a dissolved state.

The length mean diameter of the conductive material in the number-based distribution is not particularly limited and may be appropriately selected depending on the intended purpose, but is preferably 0.01 µm or more. When the length mean diameter in the number-based distribution is 0.01 µm or more, the resistance value of the heat generation layer is easily controlled to an appropriate value.

A method for measuring the length mean diameter in the number-based distribution is not particularly limited and may be appropriately selected depending on the intended purpose. For example, the length mean diameter can be measured by the same method as that for the conductive material included in the microwave reception layer.

The content of the conductive material is not particularly limited and may be appropriately selected depending on the intended purpose, but the content thereof is preferably 5% by mass or more with respect to the heat generation layer. When the content of the conductive material is 5% by mass or more, the heat generation property for film melting can be exhibited.

### (Other Components)

The other components are not particularly limited and may be appropriately selected depending on the intended purpose. Examples thereof include, but are not limited to, a dopant, resin, coloring material, solvent, wax, pigment dispersant, and cross-linking agent.

As the dopant, any material can be used without particular limitation as long as the material has a structure serving as an acceptor that easily accepts electrons or a donor that easily donates electrons to the conductive material.

At least a part of the functional group of the dopant contributes to the expression of conductivity of the conductive material by doping to the conductive material. Examples of the functional group of the dopant include, but are not limited to, a carboxyl group, a hydroxyl group, a mercapto group, an amino group, a sulfino group, and a sulfonium group.

At least a part of the functional group of the dopant contributes to the expression of conductivity of the conductive material by doping to the conductive material. Examples of the functional group of the dopant include, but are not limited to, a carboxyl group, a hydroxyl group, a mercapto group, an amino group, a sulfino group, and a sulfonium group.

The dopant having a carboxyl group is preferably a carboxylic acid aromatic compound or a carboxylic acid condensed ring aromatic compound that has an aromatic ring or a condensed ring that has many resonance structures and suppresses a hydrolysis reaction in the molecule. By using the carboxylic acid aromatic compound and the carboxylic acid condensed ring aromatic compound, a heat generation layer having enhanced water resistance can be obtained.

The carboxylic acid aromatic compound and the carboxylic acid condensed ring aromatic compound are not particularly limited and may be appropriately selected depending on the intended purpose. Examples thereof include, but are not limited to, carboxylic acid aromatic compounds such as ortho-phthalic acid, hemimellitic acid, trimesic acid, mellophanic acid, benzenepentacarboxylic acid, and mellitic acid; derivatives of carboxylic acid aromatic compounds such as 4-sulfophthalic acid; carboxylic acid aromatic condensed compounds in which naphthalene is substituted with only carboxylic acid, such as 1,4-naphthalenedicarboxylic acid, 2,3-naphthalenedicarboxylic acid, 2,6-naphthalenedicarboxylic acid, and 1,8-naphthalenedicarboxylic acid anhydride, and derivatives thereof; carboxylic acid aromatic condensed compounds such as 4-chloro-1,8-naphthalenedicarboxylic acid anhydride, 4-sulfo-1,8-naphthalenedicarboxylic acid anhydride, and naphthalene-1,4,5,8-tetracarboxylic acid, and derivatives thereof; a compound having an anthracene ring such as 2,3-anthracenedicarboxylic acid anhydride; and carboxylated polycyclic aromatic hydrocarbons such as naphthacene, pentacene, benzopyrene, chrysene, pyrene, triphenylene, cholannulene, coronene, and ovalene, and derivatives thereof.

The dopant having a hydroxyl group is not particularly limited and may be appropriately selected depending on the intended purpose. Examples thereof include, but are not limited to, salicylic acid, m-hydroxybenzoic acid, p-hydroxybenzoic acid, 4-hydroxyphthalic acid, 3-hydroxyphthalic anhydride, 3.6-dihydroxyphthalic acid, phenolsulfonic acid, 3-hydroxy-2,7-naphthalenedicarboxylic acid, and derivatives thereof.

The dopant having a mercapto group is not particularly limited and may be appropriately selected depending on the intended purpose. Examples thereof include, but are not limited to, thioglycolic acid, mercaptosuccinic acid, 2-mercaptobutyric acid, 4-mercaptobutyric acid, 2-mercaptoethanol, 2-mercaptobenzoic acid, 3-mercaptobenzoic acid, 4-mercaptobenzoic acid, o-aminothiophenol, m-aminothiophenol, p-aminothiophenol, 2-hydroxythiophenol, 3-hydroxythiophenol, 4-hydroxythiophenol, and derivatives thereof.

The dopant having an amino group is not particularly limited and may be appropriately selected depending on the intended purpose. Examples thereof include, but are not limited to, aminomethanesulfonic acid, 1-amino-2-naphthol-4-sulfonic acid, 2-amino-5-naphthol-7-sulfonic acid, 3-aminopropanesulfonic acid, N-cyclohexyl-3-aminopropanesulfonic acid, o-aminobenzenesulfonic acid, m-aminobenzenesulfonic acid, p-aminobenzenesulfonic acid, 4-amino-2-chlorotoluene-5-sulfonic acid, 4-amino-3-methylbenzene-1-sulfonic acid, 4-amino-5-methoxy-2-methylbenzenesulfonic acid, 2-amino-5-methylbenzene-1-sulfonic acid, 4-amino-2-methylbenzene-1-sulfonic acid, 5-amino-2-methylbenzene-1-sulfonic acid, 4-amino-3-methylbenzene-1-sulfonic acid, polyacrylic acid, polymethacrylic acid, polycarboxylic acid such as polymaleic acid, and derivatives thereof.

The dopant having a sulfino group is not particularly limited and may be appropriately selected depending on the intended purpose. Examples thereof include, but are not limited to, methanesulfinic acid, ethanesulfinic acid, isopropylsulfinic acid, benzenesulfinic acid, p-toluenesulfinic acid, cyclopropanesulfinic acid, derivatives of p-chlorobenzenesulfinic acid, hydroxymethanesulfinic acid, L-cysteine sulfinic acid, 2-aminoethanesulfinic acid, and derivatives thereof.

The dopant having a sulfonium group is not particularly limited and may be appropriately selected depending on the intended purpose. Examples thereof include, but are not limited to, a low molecular sulfonic acid or a salt thereof, and a sulfonic acid group-containing acidic polymer or a salt thereof.

The low molecular sulfonic acid is not particularly limited and may be appropriately selected depending on the intended purpose. Examples thereof include, but are not limited to, alkylsulfonic acid, benzenesulfonic acid, naphthalenesulfonic acid, anthraquinonesulfonic acid, camphorsulfonic acids, and derivatives thereof. Among these, a low molecular organic acid having a molecular weight of 1,000 or less is preferable.

The alkylsulfonic acid is not particularly limited and may be appropriately selected depending on the intended purpose. Examples thereof include, but are not limited to, derivatives of 2-acrylamido-2-methylpropanesulfonic acid and derivatives of dodecylbenzenesulfonic acid.

The benzenesulfonic acid is not particularly limited and may be appropriately selected depending on the intended purpose. Examples thereof include, but are not limited to, derivatives of toluenesulfonic acid, styrenesulfonic acid, and derivatives thereof.

The naphthalenesulfonic acid is not particularly limited and may be appropriately selected depending on the intended purpose. Examples thereof include, but are not limited to, 1-naphthalenesulfonic acid, 2-naphthalenesulfonic acid, 1,3-naphthalenedisulfonic acid, 1,3,6-naphthalenetrisulfonic acid, 6-ethyl-1-naphthalenesulfonic acid, and derivatives thereof.

The anthraquinone sulfonic acid is not particularly limited and may be appropriately selected depending on the intended purpose. Examples thereof include, but are not limited to, anthraquinone-1-sulfonic acid, anthraquinone-2-sulfonic acid, anthraquinone 2,6-disulfonic acid, 2-methylanthraquinone-6-sulfonic acid, and derivatives thereof.

The camphorsulfonic acid is not particularly limited and may be appropriately selected depending on the intended purpose. Examples thereof include, but are not limited to, (+)-10-camphorsulfonic acid, (-)-10-camphorsulfonic acid, and derivatives thereof. The camphorsulfonic acid may be a racemic form.

Among these, benzenesulfonic acid, toluenesulfonic acid, and naphthalenesulfonic acid are preferable. These materials may be used alone or in combination of two or more.

When the low molecular sulfonic acid is a low molecular organic acid such as alkylsulfonic acid, benzenesulfonic acid, naphthalenesulfonic acid, anthraquinonesulfonic acid, camphorsulfonic acids, or derivatives thereof, the low molecular sulfonic acid may be a salt of the low molecular organic acid. Examples of the salt of the low molecular organic acid include, but are not limited to, ammonium salts and sodium salts thereof.

The acidic polymer of the sulfonic acid group-containing acidic polymer is not particularly limited and may be appropriately selected depending on the intended purpose. Examples thereof include, but are not limited to, polycarboxylic acid such as polyacrylic acid, polymethacrylic acid, and polymaleic acid, polysulfonic acid such as polyvinyl sulfonic acid and polystyrene sulfonic acid (PSS), and copolymers having these structural units. These materials may be used alone or in combination of two or more kinds thereof. Among these, polystyrene sulfonic acid (PSS) is preferable.

The weight-average molecular weight (Mw) of the acidic polymer is not particularly limited and may be appropriately selected depending on the intended purpose, but is preferably 2,000 or more and 500,000 or less, more preferably 10,000 or more and 200,000 or less.

The total content of the dopant is not particularly limited and may be appropriately selected depending on the intended purpose, but the total content thereof is preferably 20 parts by mass or more and 3,000 parts by mass or less, more preferably 30 parts by mass or more and 1,000 parts by mass or less, with respect to 100 parts by mass of the conductive material.

The dopant may be used alone or in combination of two or more kinds thereof.

### (Resin)

The resin is not particularly limited as long as the resin does not inhibit the heat generation property, and may be appropriately selected depending on the purpose such as the film substrate, the use, and the configuration. Examples thereof include, but are not limited to, shellacs, rosins, soluble nitrocellulose, celluloses, rubbers, polyamide resin, vinyl chloride-vinyl acetate copolymer, polyester resin, polyvinylidene chloride resin, ketone resin, butyral resin, chlorinated polypropylene resin, chlorinated polyethylene resin, chlorinated ethylene vinyl acetate resin, ethylene vinyl acetate resin, acrylic resin, urethane resin, casein, alkyd resin, polyvinyl alcohol resin, ethylene-vinyl alcohol resin, and vinyl chloride resin. Among these, acrylic resins, urethane resins, vinyl chloride resins, and rubbers are preferable from the viewpoint of adhesiveness to the film substrate.

The coloring material may contain a pigment, a dye, or a mixture thereof. Among these, pigments are preferable from the viewpoint of durability.

Examples of the pigment include, but are not limited to, inorganic pigments such as titanium oxide, red iron oxide, barium sulfate, calcium carbonate, silica, zinc oxide, zinc sulfide, mica, talc, pearl, aluminum, and carbon black, organic pigments such as phthalocyanine system, insoluble azo system, condensed azo system, dioxazine system, anthraquinone system, quinacridone system, perylene system, perinone system, and thioindigo system, and various other pigments such as fluorescent pigments, metal powder pigments, and extender pigments. These pigments may be used alone or in combination of two or more.

The dye is preferably dissolved or dispersed in a solvent, and may be used alone or in combination of two or more kinds thereof. The coloring material may be included, which is very useful in terms of color variation and design.

The pigment dispersant is not particularly limited and may be appropriately selected depending on the intended purpose. Examples thereof include, but are not limited to, an anionic surfactant, a cationic surfactant, and a nonionic surfactant. These materials may be used alone or in combination of two or more kinds thereof.

The cross-linking agent is not particularly limited and may be appropriately selected depending on the intended purpose. Examples thereof include, but are not limited to, hydrazide system, isocyanate system, epoxy system, carbodiimide system, silane coupling system, oxazoline system, aziridine system, imine system, metal chelate system, glyoxal system, and methylol system. These materials may be used alone or in combination of two or more kinds thereof. Among these, isocyanate system, carbodiimide system, epoxy system, and aziridine system are preferable.

### [Resin Film Substrate]

The resin film is not particularly limited and may be appropriately selected depending on the intended purpose. Examples thereof include, but are not limited to, paper, plastic films or sheets, and laminates obtained by imparting the sealing property to these materials.

The plastic film or sheet is not particularly limited and may be appropriately selected depending on the intended purpose. Examples thereof include, but are not limited to, polyester films such as polyethylene terephthalate (PET) and polyethylene naphthalate (PEN), polyolefin films such as polyethylene, polypropylene, ethylene-vinyl acetate, polystyrene films, alcohol-based films such as ethylene-vinyl alcohol and polyvinyl alcohol, polyamide films or barrier polyamide films with an intermediate barrier layer, cellophane, moisture-proof cellophane, transparent vapor-deposited polyester films or transparent vapor-deposited polyamide films obtained by providing a vapor deposition layer of alumina, silica, or the like on a PET film or polyamide film, various coating films coated with polyvinylidene chloride resin, polyvinyl alcohol resin, polyacrylic acid resin, an easily adhesive resin, or the like. These materials may be either stretched or unstretched, and one kind or two or more kinds may be laminated.

As the plastic film or sheet, a suitable material can be selected in consideration of mechanical strength, dimensional stability, and the like.

Depending on the resin film substrate, it is desirable to select a resin film having high arc resistance in order to prevent the resin film substrate from being broken due to a current from the microwave reception layer. When the resin film substrate has a benzene ring, odor may occur due to breakage of the resin film, which is desirably avoided.

The surface of the film substrate on which the microwave reception layer and the heat generation layer are formed may be subjected to corona treatment, low-temperature plasma treatment, flame treatment, solvent treatment, coating treatment, or the like, in order to improve adhesion of the microwave heat-generating composition.

Further, the film substrate may be one obtained by laminating a thermoplastic resin or the like by a method such as dry lamination, non-solvent lamination, or extrusion lamination, a method for bonding via an adhesive or the like, or may be one obtained by appropriately combining these methods. The film may be a uniaxial oriented film, an easily cuttable film, a stretch film, or a shrink film.

As the film substrate, a laminate provided with a sealing property may be used. Examples of a method for imparting the sealing property include bonding of a known sealant film or sheet and resin coating by extrusion lamination, and a layer to which a sealing property is imparted by these methods is also referred to as a sealant.

Further, the film substrate may be subjected to scratching processing in advance.

The thickness of the film substrate is not particularly limited and may be appropriately selected depending on the intended purpose as long as the printability, the winding performance, and the like are not impaired, and the thickness of the film substrate is preferably 5 µm or more and 300 µm or less, more preferably 6 µm or more and 250 µm or less.

### [Sealant]

The sealant is preferably a layer including a resin having the sealing property. Examples of the resin that can be used include, but are not limited to, thermoplastic resins, e.g., polyethylene resin such as low density polyethylene (LDPE), linear low density polyethylene (LLDPE), high density polyethylene (HDPE), and metallocene polyethylene, polypropylene resin, ethylene-vinyl acetate copolymer, ionomer resin, ethylene-acrylic acid copolymer, ethylene-acrylic acid ethyl copolymer, ethylene-acrylic acid methyl copolymer, ethylene-methacrylic acid copolymer, ethylene-methacrylic acid methyl copolymer, ethylene-propylene copolymer, methylpentene polymer, acid-modified polyolefin resin obtained by modifying polyethylene or polypropylene with maleic acid, fumaric acid or the like, polystyrene resin. These resins may be used alone or in combination of two or more.

A film including the above resin or a laminate in which a plurality of films are laminated may be formed by lamination such as a dry lamination method, a wet lamination method, a non-solvent lamination method, or a thermal lamination method, resin coating by extrusion lamination processing, coating with a heat sealing agent, bonding via a hot melt adhesive or the like (hereinafter, sometimes referred to as "heat sealing"), or the like. The film, the laminate, or the like including any of these resins does not need to be formed over the entire surface, and may be formed in a portion to be sealed.

Examples of the film include, but are not limited to, polyolefin films such as polyethylene, polypropylene, mixed resin of polyethylene and polypropylene, ethylene-vinyl acetate copolymer resin, ethylene-(meth) acrylic acid copolymer resin, ethylene-(meth) acrylic acid methyl copolymer resin, ethylene-(meth) acrylic acid ethyl copolymer resin, and ethylene-vinyl alcohol copolymer resin.

Examples of the resin that can be used for the resin coating by extrusion lamination processing or the hot melt adhesive include, but are not limited to, thermoplastic resins, e.g., polyethylene resin such as LDPE, LLDPE, and HDPE, polypropylene resin, ethylene-vinyl acetate copolymer, ionomer resin, ethylene-acrylic acid copolymer, ethylene-acrylic acid ethyl copolymer, ethylene-acrylic acid methyl copolymer, ethylene-methacrylic acid copolymer, ethylene-methacrylic acid methyl copolymer, ethylene-propylene copolymer, methylpentene polymer, acid-modified polyolefin resin obtained by modifying polyethylene or polypropylene with maleic acid or fumaric acid, and polystyrene resin. These resins may be used alone or in combination of two or more.

The thickness of the sealant is not particularly limited, but is preferably 2 µm to 200 µm in the case of a film, 1 µm to 100 µm in the case of resin coating by extrusion lamination processing, 0.1 µm to 10 µm in the case of application of a heat sealing agent, and 1 µm to 50 µm in the case of application of a hot melt adhesive, from the viewpoint of sealing properties, costs, and productivity.

### [Adhesive Layer]

The adhesive layer can be provided, for example, between a film substrate and another film substrate or between a film substrate and a sealant. The adhesive layer is a layer formed to bond two layers with an adhesive or a pressure-sensitive adhesive (including wax and hot melt) having adhesiveness or tackiness.

Examples of the resin for forming the adhesive layer include, but are not limited to, a resin having the sealing property used for forming the above-described sealant, a urethane resin, a butadiene resin, a polyethyleneimine resin, an isocyanate resin, and chelate. As the resin for forming the adhesive layer, a commercially available adhesive can be used. Further, the adhesive may be a single liquid type adhesive in which a main agent and a curing agent are mixed, or a two liquid type adhesive in which a main agent and a curing agent are different. When the resin forming the adhesive layer is a two liquid type adhesive, the mixing ratio of the main agent and the curing agent is appropriately adjusted, mixed, and used.

### [Printing Ink Layer]

An ordinary printing ink can be used for the printing ink layer, and the printing ink can be appropriately selected depending on the film substrate. The printing ink is preferably a gravure ink such as urethane resin, vinyl chloride-vinyl acetate copolymer resin, soluble nitrocellulose, polyamide resin, acrylic resin, chlorinated polypropylene resin, or polyester resin, from the viewpoint of printability and versatility. These resins may be used alone or in combination of two or more to form a gravure ink. When gravure inks of two or more colors are used, the inks do not need to be inks of the same resin system, and inks of different resin systems can also be used as appropriate.

### [Anchor Coat Layer]

The anchor coat layer may be transparent, and can be formed by using an anchor coat agent containing a coloring material, so that various color variations and color designs can be obtained. The anchor coat layer may be provided between the film substrate and the heat generation layer.

### [Overcoat Layer]

The overcoat layer is a layer formed on the outermost surface of the microwave heating film. The overcoat layer can be formed using an overcoat agent, an overcoat varnish, an overprint varnish, or the like.

### [Other Layers]

Examples of the other layers include, but are not limited to, oriented polypropylene (OPP) films, biaxially oriented nylon (ONY) films, polyethylene terephthalate (PET) films, ethylene vinyl alcohol (EVOH) films, polyvinyl alcohol (PVA) films, cellophane films, barrier nylon films, stretched polyethylene films, (modified) polyacrylic acid-coated films, PVA coated films, transparent vapor-deposited films obtained by vapor-depositing an inorganic oxide such as aluminum oxide or silicon oxide on a film substrate such as a biaxially oriented polyethylene terephthalate film, a transparent barrier film (K coat) obtained by coating a base film such as OPP, ONY, PET, or cellophane with PVDC (polyvinylidene chloride), and a barrier film in which an ethylene-vinyl alcohol copolymer resin is laminated to be sandwiched between an OPP film and a nylon (NY) film, and these films are preferably provided on the other side of the heat generation layer.

Depending on the resin film substrate, it is desirable to select a resin film having high arc resistance in order to prevent the resin film substrate from being broken due to a current from the microwave reception layer. When the resin film substrate has a benzene ring, odor may occur due to breakage of the resin film, which is desirably avoided.

### <Method for Manufacturing Microwave Heating Film>

A method for manufacturing a microwave heating film according to an embodiment of the present invention includes a step (hereinafter, may be referred to as "microwave reception layer forming step") of forming a microwave reception layer that receives at least a microwave over a first resin film, and a step (hereinafter, may be referred to as "heat generation layer forming step") of forming one or more conductive heat generation layers to be in contact with and overlap with the microwave reception layer.

The microwave reception layer contains at least a metallic particle.

The method includes a step of laminating at least another second resin film using an adhesive over a surface of the first resin film on which the microwave reception layer and the heat generation layer are formed, and further includes other steps as appropriate.

The heat generation layer forming step and the microwave reception layer forming step can be appropriately selected from a method for applying a heat generation layer forming composition or a microwave reception layer forming composition to at least one side of the film substrate, a method for vapor-depositing a conductive material, a method for performing a plating treatment, and the like. Among these, coating, particularly printing, is preferable.

The printing step is not particularly limited and may be appropriately selected depending on the intended purpose. Examples thereof include a silk screen printing method, a gravure printing method, an offset printing method, a flexographic printing method, a roller coater method, a brushing method, a spray method, a knife jet coater method, and an inkjet method. Among these, the gravure printing method, the flexographic printing method, the inkjet method, and the silk screen printing method are preferable, and the gravure printing method is more preferable, from the viewpoint of high quality and productivity. Further, the gravure printing method is preferably a gravure printing method using a multicolor gravure printing machine. As a result, the microwave reception layer and the heat generation layer can be overprinted, and can be provided at a plurality of positions, so that the openability and the heating property of a steam release opening portion can be easily controlled.

### [Microwave Reception Layer Forming Composition]

The microwave reception layer forming composition includes a conductive material and a solvent and further includes other components as appropriate. Examples of the conductive material and the other components contained in the microwave reception layer forming composition include the same materials as those included in the above-described microwave reception layer.

The solvent is not particularly limited and may be appropriately selected depending on the intended purpose as long as the solvent dissolves or disperses the component forming the microwave reception layer forming composition and maintains fluidity. Examples thereof include commonly used organic solvents and water.

The organic solvent is not particularly limited and may be appropriately selected depending on the intended purpose. Examples thereof include, but are not limited to, aromatic hydrocarbon system solvent such as toluene and xylene, aliphatic hydrocarbon system solvent such as hexane, cyclohexane, methylcyclohexane, and ethylcyclohexane, alcohol system solvent such as methanol, ethanol, isopropyl alcohol (IPA), normal propyl alcohol, 1-butanol, 2-butanol, isobutanol, and tert-butanol, ester system solvent such as ethyl acetate, n-propyl acetate, isopropyl acetate, butyl acetate, isobutyl acetate, sec-butyl acetate, and tert-butyl acetate, ketone system solvent such as acetone, methyl ethyl ketone (MEK), methyl isobutyl ketone, and cyclohexanone, glycol ether system solvent such as ethylene glycol monomethyl ether, ethylene glycol monoethyl ether, ethylene glycol dimethyl ether, ethylene glycol monobutyl ether, propylene glycol monomethyl ether, propylene glycol monoethyl ether, propylene glycol monopropyl ether, and propylene glycol monobutyl ether, and esterified product thereof, and, as the esterified product, an acetate compound is mainly selected. Examples thereof include, but are not limited to, ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monomethyl ether acetate, and propylene glycol monoethyl ether acetate. These materials may be used alone or in combination of two or more kinds thereof. Among these, toluene, ethyl acetate, isopropyl alcohol, methyl ethyl ketone, ethanol, and water are preferable from the viewpoint of printability and versatility.

### [Heat Generation Layer Forming Composition]

The heat generation layer forming composition includes a conductive material and a solvent and further includes other components as appropriate. Examples of the conductive material and the other components included in the heat generation layer forming composition include the same materials as those included in the heat generation layer described above.

The solvent is not particularly limited and may be appropriately selected depending on the intended purpose as long as the solvent can hold the conductive material in a dissolved and dispersed state. Examples thereof include, but are not limited to, protic polar solvents such as water, methanol, ethanol, propanol, and acetic acid, and aprotic nonpolar solvents.

These materials may be used alone or in combination of two or more kinds thereof.

It is preferable to include a solvent having a boiling point higher than 100°C or more and 350°C or less.

The solvent having a high boiling point is not particularly limited and may be appropriately selected depending on the intended purpose. Examples thereof include, but are not limited to, ethylene glycol, diethylene glycol, diethylene glycol monobutyl ether, dibutylene glycol monoethyl ether, diethylene glycol monoethyl ether acetate, diethylene glycol monomethyl ether, dimethyl sulfoxide (DMSO), formamide, glycerin, propylene glycol, 1,3-butanediol, and dipropylene glycol. Among these, ethylene glycol, diethylene glycol, DMSO, glycerin, propyleneglycol, 1,3-butanediol, and dipropylene glycol are preferable.

The amount of the high-boiling-point solvent to be added is preferably 0.1% by mass or more and 50% by mass or less in the heat generation layer forming composition. When the amount is 0.1% by mass or more, the film formability can be improved. When the amount is 50% by mass or less, both the drying property and the film-forming property can be achieved.

After a film substrate is prepared by laminating one kind or two or more kinds of materials by using a lamination method (overprinting of the microwave reception layer forming composition and the heat generation layer forming composition), the microwave reception layer and the heat generation layer may be formed on one main surface of the film substrate by various printing methods. After the microwave reception layer and the heat generation layer are formed on one main surface of the film substrate by various printing methods, another film substrate may be formed on the other main surface of the film substrate by the above-described lamination method. In addition, the microwave reception layer and the heat generation layer may be formed on both surfaces of the film substrate.

When an overcoat layer is provided on the microwave reception layer and the heat generation layer, the overcoat layer can be formed using an overcoat agent, an overcoat varnish, an overprint varnish, or the like.

For the microwave heating film according to an embodiment, the printing processing in which the microwave reception layer, the heat generation layer, the printing ink layer, and the anchor coat layer are formed may be a gravure printing method using one or more units of a multicolor gravure printing machine. As a result, the microwave reception layer, the heat generation layer, the printing ink layer, the anchor coat layer, and the like, are continuously formed on the film substrate in-line, and the microwave heating film can be easily manufactured at low cost in a series of flow (one path).

In addition, it is possible to easily control the openability and the heat generation property of the steam release opening portion. When continuous formation in line is difficult due to restrictions such as the specifications of the gravure printing machine, the printing environment, and the equipment, offline (outline) formation may be performed.

Further, in the case of the printing step by the gravure printing method, when the microwave reception layer and the heat generation layer are formed, the openability and the heating property can be easily controlled by lowering the 100% dot area ratio, adjusting the plate depth, or adjusting the dilution ratio depending on the case where the heating property is too large at the area ratio or the degree of requirement of the openability of the steam release opening portion.

The microwave reception layer and the heat generation layer may be formed on a portion to be opened, and may be formed on the entire surface. In addition, different application patterns such as figures and designs may be formed depending on the shape of the steam release opening portion and the degree of requirement of the openability.

The printing step is preferably a gravure printing method for forming one or more colors of gravure ink, and a printing ink layer can be arbitrarily formed on the opposite surface of the microwave reception layer and the heat generation layer, between the film substrate and the microwave reception layer and the heat generation layer, or between the microwave reception layer and the heat generation layer and the anchor coat layer.

Further, the printing step is preferably a gravure printing method using a multicolor gravure printing machine. Since the microwave reception layer and the heat generation layer are almost colorless and transparent, the microwave reception layer and the heat generation layer can be provided in-line at the same time by forming the printing ink layer without disturbing other information such as picture patterns, so that various color variations and color designs can be obtained. For example, a package design or the like can be applied, a purchase appeal effect can be enhanced, information such as an opening position, an opening method, or an alert can be displayed, and information such as a company name, a logo, a product name, a character, contents, component display, an application method or a campaign announcement, a way of eating or using, a date, a place of origin, or a winning lottery can be given.

A forming step in which an intermediate layer, an anchor coat layer, an overcoat layer, and the like, are formed may be included. These layers are not particularly limited as long as the layers are formed by a known forming step such as bonding or coating.

Each composition such as a low-resistance composition, a high-resistance composition, a printing ink, and an anchor coating agent can be produced by a known method by uniformly dissolving or dispersing a conductive organic compound, a resin, a pigment, a sealing resin, various additives, and the like, in a solvent. For the dissolution or dispersion, various stirrers or dispersers such as a dissolver, a roll mill, a ball mill, a bead mill, a sand mill, an attritor, a paint shaker, an agitator, a HENSCHEL mixer, a colloid mill, a pearl mill, an ultrasonic homogenizer, a wet jet mill, a kneader, and a homomixer can be used. These devices may be used alone or in combination of two or more. In a case where air bubbles or coarse particles are included in each composition, it is preferable to remove the air bubbles or the coarse particles by using a known filter, a centrifugal separator, or the like, because the printability or the quality of printed matter is deteriorated.

The viscosity of each of the above compositions is not particularly limited as long as the viscosity falls within a range that does not hinder printing. In consideration of the production suitability, handleability, and the like, of each composition, the viscosity is preferably 10 mPa·s to 1000 mPa·s in 25°C. For the gravure printing ink, the viscosity is more preferably 10 mPa·s to 500 mPa·s.

The viscosity can be measured using a commercially available viscometer such as a BROOKFIELD viscometer.

The microwave heating film according to an embodiment includes the microwave reception layer and the heat generation layer, and the microwave reception layer and the heat generation layer include the low-resistance composition and the high-resistance composition according to the above-described embodiment. In the microwave heating film according to an embodiment, when the heat generation layer generates heat by irradiation with microwaves, the substrate is locally heated by the heat generation of the microwave reception layer and the heat generation layer, and the opening portion can be easily formed from the central portion by breakage of the microwave heating film. Therefore, the microwave heating film according to the embodiment can exhibit a high steam passage property such that the steam passage port can be provided without causing a short circuit even when a large amount of food material is sealed in a container, and the film can be prevented from falling into the container even when the steam passage port is provided.

Since the microwave heating film according to the embodiment has the characteristics as described above, the microwave heating film can be suitably used as a microwave heating film for a package, and can be particularly effectively used as a microwave heating film for a steam-releasing package.

### <Microwave Heating Package>

A microwave heating package according to an embodiment of the present invention includes at least the above-described microwave heating film according to an embodiment of the present invention, and as appropriate, further includes a container or a film that receives the contents of the package.

The microwave heating package may be in any form in which a microwave heating film is generally used. The microwave heating package may be two sided seal, three sided seal, four sided seal, pillow seal, standing pouch, envelope attachment, gusset, fusion seal, tube, caramel packaging, overhold, fin seal, bun packaging, twist, rocket, Tetra Pak^{®}, gable top, brick, vacuum, cup, tray, bottle, container, box, case, institutional container, cover, lid, cap, lid material, label, sheet, or the like.

The method for manufacturing the microwave heating package preferably includes a step of molding a package by using the microwave heating film.

In the forming step, the microwave heating film may be formed into a package. One microwave heating film may be folded and sealed at both ends to form a bag shape. Two microwave heating films may be overlapped to face each other and sealed at both ends to form a bag shape.

In the forming step, the container may be covered with the microwave heating film to form a package.

The forming step may use a method used for forming a general package, such as two sided seal, three sided seal, four sided seal, pillow seal, standing pouch, envelope attachment, gusset, fusion seal, tube, caramel packaging, overhold, fin seal, bun packaging, twist, rocket, Tetra Pak^{®}, gable top, brick, vacuum, cup, tray, bottle, container, box, case, institutional container, cover, lid, cap, lid material, label, sheet, or the like.

FIG. 1 is a diagram illustrating a microwave heating package according to an embodiment.

FIG. 1 is an example of a microwave heating package using a microwave heating film according to an embodiment. The microwave heating package is a packaging container in which a microwave heating film and a container are heat-sealed at a heat-sealed portion, and the microwave heating film is provided such that a microwave reception layer and a heat generation layer are positioned so as not to be vertically arranged in the heat-sealed portion in a plan view.

The microwave heating package according to an embodiment includes a heat generation layer and a microwave reception layer, and the heat generation layer and the microwave reception layer include a high-resistance composition and a low-resistance composition according to the embodiment described above. In the microwave heating package according to one embodiment, the heat generation layer and the microwave reception layer generate heat by irradiation with microwaves at the time of heating, and thus, when the heat generation layer and the microwave reception layer are superimposed at the heat-sealed portion, the opening portion is easily formed from the heat-sealed portion due to shrinkage of the film. When the heat generation layer and the microwave reception layer are provided in the central portion of the microwave heating film, the opening portion is easily formed from the central portion due to the breakage of the microwave heating film. Therefore, the microwave heating film according to the embodiment can exhibit a high steam passage property such that the steam passage port can be provided without causing a short circuit even when a large amount of food material is sealed in the container, and the film can be prevented from falling into the container even when the steam passage port is provided.

The microwave heating package according to the embodiment can exhibit a high heating capacity even when a large amount of food material is present, and thus can be suitably used as, for example, a package in which a through-hole is formed by irradiation with microwaves. The microwave heating package according to the embodiment can be suitably used as, for example, a cooking sheet for browning a food material by microwave irradiation.

Although the embodiment has been described above, the above embodiment is presented as an example, and the present invention is not limited to the above embodiment. The above-described embodiments can be implemented in various other forms, and various combinations, omissions, substitutions, changes, and the like can be made without departing from the spirit of the invention. These embodiments and modifications thereof are included in the scope and spirit of the invention, and are also included in the invention described in the claims and the scope of equivalents thereof.

### [Example]

Hereinafter, the embodiment will be described in more detail with reference to examples and comparative examples, but the embodiment is not limited to these examples and comparative examples.

### <Manufacturing of Heat Generation Layer Forming Composition>

A heat generation layer forming composition is obtained by mixing 10 parts by mass of a poly(3,4-ethylenedioxythiophene)-poly(styrenesulfonate) (PEDOT:PSS) solvent (S-300, manufactured by AGFA Materials Japan. LTD.) as a conductive material and 2 parts by mass of ethanol. Ethylene glycol is added to the obtained heat generation layer forming composition at a wet ratio in the range of 0.1% to 10% to control the resistivity of the heat generation layer.

### (Examples 1 to 4 and Comparative Example 1)

### <Manufacturing of Microwave Reception Layer Forming Composition>

A microwave reception layer forming composition is obtained in which a butyl acetate solvent is set to be constant and a resin ratio R (a volume ratio of resin/(metallic particles + resin)) is set to be 29.5% with respect to a silver particle powder ink (DOTITE^{®}, manufactured by Fujikura Kasei Co., Ltd.) including silver particles, a resin material, and the butyl acetate solvent as a conductive material. The silver particle powder ink is adjusted so that the weight ratio of the metallic particles and the resin, which are solid contents, is 62%. In order to vary the resistivity of the microwave reception layer, the microwave reception layer forming composition is vibrated with ultrasonic waves to change the aggregation state, and control is performed so that the resistivity after application shaping is changed.

### <Manufacturing of Overcoat Layer Forming Composition>

An overcoat layer forming composition was obtained by mixing 15 parts by mass of AD393 (main agent, polyurethane, manufactured by Toyo-Morton, Ltd.), 1 part by mass of CAT-EP1 (curing agent, manufactured by Toyo-Morton, Ltd.), and 17 parts by mass of ethanol.

### <Manufacturing of Microwave Heating Film>

The microwave reception layer forming composition and the heat generation layer forming composition are applied onto an OPP substrate using a gravure printing machine to have the application shape illustrated in FIG. 4A, and a microwave reception layer and a heat generation layer are formed to prepare a gravure printing plate. The film thicknesses of the microwave reception layer and the heat generation layer are 1.2 µm and 0.16 µm, respectively. Thereafter, the wet liquid is applied onto the substrate by gravure printing, and is dried at 90°C for one minute to obtain the thickness. The microwave reception layer forming composition and the heat generation layer forming composition are vibrated with ultrasonic waves to change the aggregation state so that the resistivity after application shaping is controlled to be changed.

Also, after forming an application shape of 40 mm × 20 mm, the resistivities of the microwave reception layer and the heat generation layer are measured. The resistivity at that time is illustrated in Table 1.

As illustrated in FIG. 2A, an overcoat layer having a thickness of 2 µm is formed using the overcoat layer forming composition on the OPP substrate on which the microwave reception layer and the heat generation layer are formed, is dried at 90°C for one minute, and then cured at 40°C for 48 hours.

As illustrated in FIG. 1, a test sample is prepared by attaching the above-described film to a container containing water of 300 ml instead of a food material with a double-sided tape, and sealing the side portion with a cellophane tape.

The prepared test sample is heated in a microwave oven at 600 W for 4 minutes, and film deformation of the microwave reception layer portion (including the periphery), breakage (cracking or the like) of the microwave reception layer, the steam passage property in a state where the water is boiling, and falling of broken pieces are visually checked. The results are illustrated in Table 1.

### (Film Deformation and Breakage of Microwave Reception Layer)

### [Evaluation Criterion]

∘: The film is not deformed (deformation cannot be visually checked)
△: The film is slightly deformed
×: The film is deformed or the microwave reception layer is broken

### (Steam Passage Property)

### [Evaluation Criterion]

∘: The container is hardly deformed in a state where steam due to boiling of water in the container is discharged through the steam port, and the steam does not leak from the side surface sealed with the cellophane tape
△: The container is deformed, but the steam does not leak from the side surface
×: The container is largely deformed, and the steam leaks from the side surface

### (Fall of Broken Pieces)

### [Evaluation Criterion]

∘: Any of smoke, light generation, burn, and odor does not occur during heating
×: Any of smoke, light generation, burn, and odor occurs during heating

As a result of Table 1, when the resistivity of the microwave reception layer exceeds 7.0 × 10⁻⁵ Ω·m, the film is deformed and the broken pieces fall.

**Table 1**

| | | EXAMPLE 1 | EXAMPLE 2 | EXAMPLE 3 | COMPARATIVE EXAMPLE 1 |
|---|---|---|---|---|---|
| RESIN RATIO R (%) OF MICROWAVE RECEPTION LAYER | | 29.5 | 29.5 | 29.5 | 29.5 |
| RESISTIVITY (Ω·m) | HEAT GENERATION LAYER | 8.0 × 10⁻⁵ | 8.0 × 10⁻⁵ | 8.0 × 10⁻⁵ | 8.0 × 10⁻⁵ |
| | MICROWAVE RECEPTION LAYER | 3.5 × 10⁻⁷ | 6.3 × 10⁻⁵ | 7.0 × 10⁻⁵ | 4.2 × 10⁻⁴ |
| EVALUATION | FILM DEFORMATION, BREAKAGE OF MICROWAVE RECEPTION LAYER | ○ | ○ | Δ | × |
| | STEAM PASSAGE PROPERTY | ○ | ○ | ○ | ○ |
| | FALL OF BROKEN PIECES | ○ | ○ | ○ | × |

### (Examples 4 to 6 and Comparative Examples 2 and 3)

In the same manner as in the layer structure according to Example 1, the amount of solvent ethylene glycol to be added to the heat generation layer forming composition is changed and the resistivity after application shaping is controlled to be changed, and in order to obtain the application shape illustrated in FIG. 4A, the microwave reception layer and the heat generation layer are formed on the OPP substrate by using a gravure printing machine so as to produce a gravure printing plate. The film thicknesses of the microwave reception layer and the heat generation layer are 1.2 µm and 0.16 µm, respectively. Thereafter, the wet liquid is applied onto the substrate by gravure printing, and is dried at 90°C for one minute to obtain the thickness.

Also, after forming an application shape of 40 mm × 20 mm, the resistivities of the microwave reception layer and the heat generation layer are measured. The results are illustrated in Table 2.

As illustrated in FIG. 2A, an overcoat layer having a thickness of 2 µm is formed using the overcoat layer forming composition on the OPP substrate on which the microwave reception layer and the heat generation layer are formed, is dried at 90°C for one minute, and then cured at 40°C for 48 hours.

As illustrated in FIG. 1, a test sample is prepared by attaching the above-described film to a container containing water of 300 ml instead of a food material with a double-sided tape, and sealing the side portion with a cellophane tape.

The prepared test sample is heated in a microwave oven at 600 W for 4 minutes, and the steam passage property in a state where the water is boiling is visually checked in the same manner as in Example 1. The results are illustrated in Table 2.

As a result of Table 2, when the resistivity of the heat generation layer deviates from 1.6 × 10⁻⁵ Ω·m to 8.0 × 10⁻³ Ω·m, the steam passage property decreases.

**Table 2**

| | | EXAMPLE 4 | EXAMPLE 5 | EXAMPLE 6 | COMPARATIVE EXAMPLE 2 | COMPARATIVE EXAMPLE 3 |
|---|---|---|---|---|---|---|
| RESIN RATIO R (%) OF MICROWAVE RECEPTION LAYER | | 29.5 | 29.5 | 29.5 | 29.5 | 29.5 |
| RESISTIVITY (Ω·m) | HEAT GENERATION LAYER | 1.6 × 10⁻⁵ | 8.0 × 10⁻⁵ | 8.0 × 10⁻⁵ | 1.2 × 10⁻⁵ | 9.6 × 10⁻³ |
| | MICROWAVE RECEPTION LAYER | 3.5 × 10⁻⁷ | 3.5 × 10⁻⁷ | 3.5 × 10⁻⁷ | 3.5 × 10⁻⁷ | 3.5 × 10⁻⁷ |
| EVALUATION | STEAM PASSAGE PROPERTY | Δ | ○ | Δ | ○ | ○ |

### (Example 7)

In the same manner as in Example 1, in order to obtain the application shape illustrated in FIG. 4A, the microwave reception layer and the heat generation layer are formed with the film thicknesses of 1.2 µm and 0.16 µm, respectively, on the OPP substrate by using a gravure printing machine, and dried at 90°C for one minute.

As illustrated in FIG. 2A, an overcoat layer having a thickness of 2 µm is formed using the overcoat layer forming composition on the OPP substrate on which the microwave reception layer and the heat generation layer are formed, and dried at 90°C for one minute, and then an OPP substrate is laminated as a second resin film, and cured at 40°C for 48 hours to prepare the film according to Example 7.

Example 1 and Example 7 are subjected to a 3H scratch test on both sides for "scratch hardness (pencil method)" in accordance with JIS K 5600-5-4:1999. Then, as illustrated in FIG. 1, a test sample is prepared by attaching the above-described film to a container containing water of 300 ml instead of a food material with a double-sided tape, and sealing the side portion with a cellophane tape.

The prepared test sample is heated in a microwave oven at 600 W for 4 minutes, and light generation and breakage of the microwave reception layer during steam passage are evaluated, and the steam passage property and falling of broken pieces are visually evaluated in a state where the water is boiling. The results are illustrated in Table 3.

The lamination makes it possible to ensure a strength that can withstand pencil hardness.

**Table 3**

| | | EXAMPLE 1 | EXAMPLE 7 |
|---|---|---|---|
| EVALUATION | LIGHT GENERATION OF MICROWAVE RECEPTION LAYER | Δ | ○ |
| | BREAKAGE OF MICROWAVE RECEPTION LAYER | Δ | ○ |
| | STEAM PASSAGE PROPERTY | ○ | ○ |
| | FALL OF BROKEN PIECES | Δ | ○ |

### (Example 8)

Instead of the OPP substrate as a laminate substrate according to Example 7, an easy-peel substrate (9501K2 manufactured by Toray Industries, Inc.) is bonded as the second resin film to produce a film according to Example 8.

It is confirmed that the film could be attached to the container and peeled off while maintaining the quality of the steam passage property.

### (Examples 9 and 10 and Comparative Example 4)

In order to obtain the application shape illustrated in FIG. 4B, the microwave reception layer and the heat generation layer are formed with the film thicknesses of 1.2 µm and 0.16 µm, respectively, on the OPP substrate by using a gravure printing machine, and dried at 90°C for one minute.

As illustrated in FIG. 2B, an adhesive layer having a thickness of 2 µm is formed using an adhesive layer forming composition on the OPP substrate on which the microwave reception layer and the heat generation layer are formed, dried at 90°C for one minute, and then an easy-peel substrate (9501K2, manufactured by Toray Industries, Inc.) is laminated as a second resin film and cured at 40°C for 48 hours.

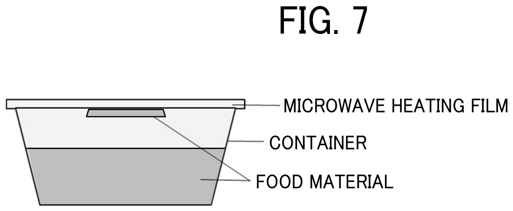

As illustrated in FIG. 7, the film is heated and attached to the container containing a food material, and the food material is shaken up and down 10 times, inverted, and returned to the original state after 10 seconds.

In Comparative Example 4, the easy-peel substrate was not subjected to water repellent/oil repellent finish. In Example 9, water repellent/oil repellent finish is applied to the easy-peel substrate so that a water contact angle was 140° and a rapeseed oil contact angle was 110°. In Example 10, water repellent/oil repellent finish is applied to the easy-peel substrate so that a water contact angle was 160° and a rapeseed oil contact angle was 130°.

In the measurement of the contact angle, water or rapeseed oil is dropped from a nozzle onto the surface of the resin film in the direction of the food material, an image is taken with a camera, and the contact angle is determined from the shape of the dropped droplet.

As illustrated in FIG. 7, in Comparative Example 4, Example 9, and Example 10, consomme soup with parsley and simmered mackerel with miso are added as food materials and heated in a microwave oven at 600 W for 4 minutes, and container deformation, burn at the steam passage portion, and smell are confirmed by visual observation, sense of smell, and dropping of broken pieces. Results are illustrated in Table 4. The determination is made based on the confirmed items, and when a problem occurs in even one item, the determination is made as "×".

Burn at the steam passage portion and smell occur when the food material adheres to the film at the portion of the steam passage port, and are improved by reducing the adhesion of the food material to the film by water repellent/oil repellent finish. A water contact angle of 140° or more and a rapeseed oil contact angle of 110° or more are desirable, and preferably, a water contact angle of 160° and a rapeseed oil contact angle of 130° or more are desirable.

**Table 4**

| | EXAMPLE 9 | EXAMPLE 10 | COMPARATIVE EXAMPLE 4 |
|---|---|---|---|
| STEAM PASSAGE PROPERTY | ○ | ○ | ○ |
| CONSOMME SOUP WITH PARSLEY | ○ | ○ | × |
| SIMMERED MACKEREL WITH MISO | × | ○ | × |

### (Examples 11 to 14 and Comparative Examples 5 to 8)

The microwave reception layer is formed using a gravure printing machine on the OPP substrate by using a heat generation layer forming composition in which the resin ratio R (the volume ratio of resin/(metallic particles + resin)) is changed as illustrated in Table 5, and the application shape and the film thickness of various a and b illustrated in FIG. 4B are changed with a gravure plate. The silver particle powder ink is adjusted so that the weight ratio of the metallic particles and the resin, which are solid contents, is 62%. The heat generation layer is formed on the OPP substrate by using a gravure printing machine by adjusting the film thickness with a gravure plate so as to have a film thickness of 0.16 µm, and is dried at 90°C for one minute.

An adhesive layer having a thickness of 2 µm is formed using an adhesive layer forming composition on the OPP substrate on which the microwave reception layer and the heat generation layer are formed, dried at 90°C for one minute, and then an easy-peel substrate (9501K2, manufactured by Toray Industries, Inc.) is laminated as the second resin film and cured at 40°C for 48 hours.

With respect to the shape illustrated in FIG. 4B, the film thickness D of the microwave reception layer, the resin ratio R, and the area S (a × b in FIG. 4B) surrounded by each microwave reception layer are changed, and α = D/√S/R of Equation (1) is calculated and illustrated in Table 5.

In a case where three are arranged as in FIG. 4C, there are α1 and α2 corresponding to a1 and a2, respectively, which both desirably satisfy 1.8 × 10⁻⁴ or more. A case where four or more are arranged is similarly considered.

As illustrated in FIG. 1, the above-described film is heated and attached to the container containing water of 300 ml instead of a food material, and is heated in a microwave oven at 600 W for 4 minutes, and the steam passage property is visually checked in a state where the water is boiling. Results are illustrated in Table 5. ("∘" in the steam passage property means that the container is not deformed in a state of emitting steam even when the water in the container is boiled)
Next, as illustrated in FIG. 5, water at a height of 2 mm is placed on the microwave heating film, water of 300 ml is put instead of the food material, microwave heating is performed at 600 W for 4 minutes, and breakage of the microwave reception layer and falling of broken pieces are visually checked. Results are illustrated in Table 5.

When the parameter α is 1.8 × 10⁻⁴ or more, it is possible to achieve both the steam passage property and suppression of metallic breakage.

**Table 5**

| | | EXAMPLE 11 | EXAMPLE 12 | EXAMPLE 13 | EXAMPLE 14 | COMPARATIVE EXAMPLE 5 | COMPARATIVE EXAMPLE 6 | COMPARATIVE EXAMPLE 7 | COMPARATIVE EXAMPLE 8 |
|---|---|---|---|---|---|---|---|---|---|
| RESIN RATIO R (%) OF MICROWAVE RECEPTION LAYER | | 25.5 | 29.5 | 36.2 | 29.5 | 36.2 | 36.2 | 36.2 | 61.4 |
| D (µm) | | 1.2 | 1.2 | 1.2 | 1.8 | 0.6 | 0.9 | 1.2 | 1.2 |
| S (mm²) | | 328 | 328 | 328 | 328 | 328 | 328 | 376 | 328 |
| A (mm) | | 8 | 8 | 8 | 8 | 8 | 8 | 8 | 8 |
| B (mm) | | 41 | 41 | 41 | 41 | 41 | 41 | 47 | 41 |
| α | | 2.6 × 10⁴ | 2.2 × 10⁴ | 1.8 × 10⁴ | 2.7 × 10⁴ | 9.2 × 10⁴ | 1.4 × 10⁴ | 1.7 × 10⁴ | 1.1 × 10⁴ |
| EVALUATION | FILM DEFORMATION, BREAKAGE OF MICROWAVE RECEPTION LAYER | ○ | ○ | Δ | × | × | × | × | × |
| | STEAM PASSAGE PROPERTY | ○ | ○ | ○ | ○ | ○ | ○ | ○ | ○ |
| | FALL OF BROKEN PIECES | ○ | ○ | ○ | × | × | × | × | × |

### (Examples 15 and 16 and Comparative Example 9)

With regard to the shapes illustrated in FIGS. 4A and 4B (W = 2 mm, 1 mm, V = 1 mm), the microwave reception layer and the heat generation layer are formed on the OPP substrate by using a gravure printing machine by adjusting the film thicknesses with a gravure plate so as to have film thicknesses of 1.2 µm and 0.16 µm, respectively, and are dried at 90°C for one minute.

An adhesive layer having a thickness of 2 µm is formed using an adhesive layer forming composition on the OPP substrate on which the microwave reception layer and the heat generation layer are formed, dried at 90°C for one minute, and then an easy-peel substrate (9501K2, manufactured by Toray Industries, Inc.) is laminated as the second resin film and cured at 40°C for 48 hours.

As illustrated in FIG. 1, the above-described film is heated and attached to the container containing water of 300 ml instead of a food material, and is heated in a microwave oven at 600 W for 4 minutes, and the steam passage property is visually checked in a state where the water is boiling. Results are illustrated in Table 5. ("∘" in the steam passage property means that the container is not deformed in a state of emitting steam even when the water in the container is boiled)

Next, as illustrated in FIG. 5, water at a height of 2 mm is placed on the microwave heating film, water of 300 ml is put instead of the food material, microwave heating is performed at 600 W for 4 minutes, and breakage of the microwave reception layer and the film in the vicinity are visually checked and falling of broken pieces are checked. Results are illustrated in Table 6.

Although metal breakage occurs in all of the three conditions, the area to be broken is reduced by forming the film into the hollow shape, so that breakage of the film does not occur and the amount of broken pieces falling onto the food material can be reduced. (Cost reduction can also be realized)

**Table 6**

| | EXAMPLE 15 | EXAMPLE 16 | COMPARATIVE EXAMPLE 9 |
|---|---|---|---|
| SHAPE | FIG. 4B | FIG. 4B | FIG. 4A |
| a (mm) | 8 | 8 | 8 |
| b (mm) | 49 | 49 | 49 |
| W (mm) | 2 | 1 | - |
| AREA OF MICROWAVE RECEPTION LAYER | 224 | 120 | 384 |
| STEAM PASSAGE PROPERTY | ○ | ○ | ○ |
| BREAKAGE OF MICROWAVE RECEPTION LAYER | × | × | × |
| FILM BREAKAGE | ○ | ○ | × |
| FALL OF BROKEN PIECES | ○ | ○ | × |

### (Examples 17 and 18 and Comparative Examples 11 to 13)

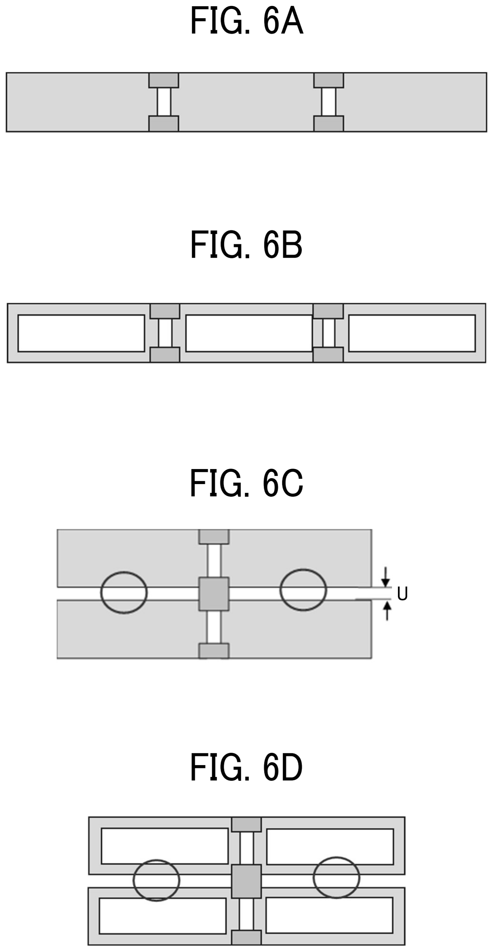

With respect to the shapes illustrated in FIGS. 6A to 6D, the microwave reception layer and the heat generation layer are formed on the OPP substrate to have film thicknesses of 1.2 µm and 0.16 µm, respectively, using a gravure printing machine, and are dried at 90°C for one minute.

An adhesive layer having a thickness of 2 µm is formed using an adhesive layer forming composition on the OPP substrate on which the microwave reception layer and the heat generation layer are formed, dried at 90°C for one minute, and then an easy-peel substrate (9501K2, manufactured by Toray Industries, Inc.) is laminated as the second resin film and cured at 40°C for 48 hours.

As illustrated in FIG. 1, the above-described film is heated and attached to the container containing water of 50 ml instead of the food material, and is heated in a microwave oven at 600 W for 30 seconds, and breakage of the microwave reception layer is visually checked. The evaluation is performed 6 times for each case, and when the microwave reception layer is not broken in all 6 cases, it is determined as "∘", when the microwave reception layer is broken in all 6 cases, it is determined as "×", and when the microwave reception layer is broken in 1 to 5 cases, it is determined as "△".

### (a portion surrounded by a red circle in the drawing is a broken portion)

As illustrated in FIG. 1, the above-described film is heated and attached to the container containing water of 300 ml instead of the food material, and is heated in a microwave oven at 600 W for 4 minutes, and the steam passage property is visually checked in a state where the water is boiling, and falling of broken pieces is checked. Results are illustrated in Table 7.

In FIGS. 6A and 6B in which the microwave reception layers are arranged in line, it can be confirmed that the microwave reception layer is not broken, but in FIGS. 6C and 6D, when a distance U is short, the microwave reception layer is broken, and, preferably, the respective microwave reception layers are not arranged close to each other on the side other than the side in contact with the heat generation layer. Here, the distance U is the distance between the long sides of the adjacent microwave reception layers.

In FIGS. 6C and 6D, when the distance U is 2 mm, a steam passage port is not formed in the central portion, and it is determined as △. That is, the distance U is preferably twice or more the distance V.

**Table 7**

| | EXAMPLE 17 | EXAMPLE 18 | COMPARATIVE EXAMPLE 10 | COMPARATIVE EXAMPLE 11 | COMPARATIVE EXAMPLE 12 | COMPARATIVE EXAMPLE 13 |
|---|---|---|---|---|---|---|
| SHAPE | FIG. 6A | FIG. 6B | FIG. 6C | FIG. 6C | FIG. 6D | FIG. 6D |
| U (mm) | - | - | 1 | 2 | 1 | 2 |
| METAL BREAKAGE | ○ | ○ | × | Δ | × | Δ |
| STEAM PASSAGE PROPERTY | ○ | ○ | ○ | Δ | ○ | Δ |
| FALL OF BROKEN PIECES | ○ | ○ | × | Δ | × | Δ |

### (Example 19 and Comparative Examples 14 and 15)

In contrast to Example 11, a sample is prepared by changing the first resin film to a material having a different arc resistance, and in the form of FIG. 3, water of 300 ml is put instead of the food material, and microwave heating is performed at 600 W for 4 minutes, and the occurrence of light generation and smoke during microwave heating is visually checked (including falling of broken pieces) at the steam passage portion. Arc resistance is measured in accordance with JIS C 2135 and JIS K 6911. The evaluation results are illustrated in Table 8.

It can be understood that, when the material property of the arc resistance is 120 seconds or more, light generation and smoke do not occur.

**Table 8**

| | EXAMPLE 11 | EXAMPLE 19 | COMPARATIVE EXAMPLE 14 | COMPARATIVE EXAMPLE 15 |
|---|---|---|---|---|
| SUBSTRATE | OPP | NYLON | PET | PVC |
| ARC RESISTANCE (SECOND) | 185 | 135 | 105 | 70 |
| LIGHT GENERATION | ○ | ○ | × | × |
| SMOKE | ○ | ○ | × | × |
| FALL OF BROKEN PIECES | ○ | ○ | × | × |

In contrast to Example 11, a sample is prepared by changing the first resin film to a material having a different arc resistance, and in the form of FIG. 3, water of 300 ml is put instead of the food material, and microwave heating is performed at 600 W for 4 minutes, and the occurrence of odor and falling of broken pieces after microwave heating are confirmed at the steam passage portion. The results for checked odor are illustrated in Table 9.

It is understood that the presence or absence of a benzene ring in the material of the first resin film determines whether odor occurs.

**Table 9**

| | EXAMPLE 11 | EXAMPLE 19 | COMPARATIVE EXAMPLE 14 |
|---|---|---|---|
| SUBSTRATE | OPP | NYLON | PET |
| BENZENE RING | ABSENT | ABSENT | PRESENT |
| ODOR | ○ | ○ | × |
| FALL OF BROKEN PIECES | ○ | ○ | × |

### (Example 20, Comparative Example 16)

With regard to the shape illustrated in FIG. 4B, the print layer, the microwave reception layer, and the heat generation layer are formed on the OPP substrate by using a gravure printing machine by adjusting the film thicknesses with a gravure plate so as to have film thicknesses of about 1 µm, 1.2 µm, and 0.16 µm, respectively, and are dried at 90°C for one minute. At that time, films with and without a print layer in the steam passage port are prepared, and the film without a print layer is Example 20 and the film with a print layer is Comparative Example 16.

An adhesive layer having a thickness of 2 µm is formed using an adhesive layer forming composition on the OPP substrate on which the microwave reception layer and the heat generation layer are formed, dried at 90°C for one minute, and then an easy-peel substrate (9501K2, manufactured by Toray Industries, Inc.) is laminated as the second resin film and cured at 40°C for 48 hours.

As illustrated in FIG. 1, the above-described film is heated and attached to the container containing water of 300 ml instead of the food material, and is heated in a microwave oven at 600 W for 4 minutes, and the steam passage property in a state where the water is boiling and falling of broken pieces are visually checked. Results are illustrated in Table 10.

It can be seen that, when the print layer is present in the steam passage portion, falling of broken pieces and metal breakage occur.

**Table 10**

| | EXAMPLE 20 | COMPARATIVE EXAMPLE 16 |
|---|---|---|
| STEAM PASSAGE PORTION DESIGN PRINT | ABSENT | PRESENT |
| STEAM PASSAGE PROPERTY | ○ | × |
| FALL OF BROKEN PIECES | ○ | × |

### (Example 21, Comparative Example 17)

With regard to the shape illustrated in FIG. 4B, the print layer, the microwave reception layer, and the heat generation layer are formed on the OPP substrate by using a gravure printing machine by adjusting the film thicknesses with a gravure plate so as to have film thicknesses of about 1 µm, 1.2 µm, and 0.16 µm, respectively, and are dried at 90°C for one minute. At this time, films with and without a print layer under the microwave reception layer are prepared, and the film with a print layer is Example 21 and the film without a print layer is Comparative Example 17.

For each of Example 21 and Comparative Example 17, a roll-shaped film sample is prepared with or without a print layer under the microwave reception layer, and the film sample is left to stand for 3 days, and it is checked whether blocking due to sticking has occurred. Results are illustrated in Table 11.

An adhesive layer having a thickness of 2 µm is formed using an adhesive layer forming composition on the OPP substrate on which the microwave reception layer and the heat generation layer are formed, dried at 90°C for one minute, and then an easy-peel substrate (9501K2, manufactured by Toray Industries, Inc.) is laminated as the second resin film and cured at 40°C for 48 hours.

As illustrated in FIG. 1, the above-described film is heated and attached to the container containing water of 300 ml instead of the food material, and is heated in a microwave oven at 600 W for 4 minutes, and the steam passage property in a state where the water is boiling is visually checked. Results are illustrated in Table 11.

The steam passage property is maintained, and when the print layer is present under the microwave reception layer, there is an improvement such that blocking does not occur.

It is understood that, when the print layer is present in the steam passage portion, broken pieces fall and metal breakage occurs in all of the three conditions.

**Table 11**

| | EXAMPLE 21 | COMPARATIVE EXAMPLE 17 |
|---|---|---|
| PRINT LAYER | PRESENT | ABSENT |
| STEAM PASSAGE PROPERTY | ○ | ○ |
| BLOCKING | ○ | × |

Aspects of embodiments of the present invention are, for example, as follows.

According to Aspect 1, a microwave heating film includes:
a first resin film;
a microwave reception layer over the first resin film; and
one or more heat generation layers in contact with the microwave reception layer,
in which the microwave reception layer includes a metallic particle,
a resistivity of the microwave reception layer is 7.0 × 10⁻⁵ Ω·m or less, and
a resistivity of the heat generation layer is 1.6 × 10⁻⁵ Ω·m to 8.0 × 10⁻³ Ω·m.

According to Aspect 2, the microwave heating film of Aspect 1 further includes a second resin film over the microwave reception layer and the one or more heat generation layers.

According to Aspect 3, in the microwave heating film of Aspect 2, the second resin film has heat sealing finish on a surface opposite to a surface facing the microwave reception layer and the one or more heat generation layers over the first resin film.

According to Aspect 4, in the microwave heating film of Aspect 1 or 2, the first resin film has at least one of water repellent finish and oil repellent finish on a surface over which none of the microwave reception layer and the one or more heat generation layers is disposed.

According to Aspect 5, in the microwave heating film of Aspect 4, the surface of the first resin film (1) having the water repellent finish has a contact angle of 140 degrees or more for water, and the surface of the first resin film (1) having the oil repellent finish has a contact angle of 110 degrees or more for rapeseed oil.

According to Aspect 6, in the microwave heating film of Aspect 1 or 2, the microwave reception layer comprises a mixture of the metallic particle and a resin, and α represented by the following Equation (1) is equal to or more than 1.8 × 10⁻⁴, where D is a thickness of the microwave reception layer, R is a volume ratio of the resin to the total of the metallic particle and the resin, and S is an area surrounded by of the microwave reception layer. $α = D / √ S / R$

According to Aspect 7, in the microwave heating film of Aspect 1 or 2, the microwave reception layer has a hollow structure.

According to Aspect 8, the microwave heating film of Aspect 1 or 2 wherein the microwave reception layer includes a first microwave reception layer and a second microwave reception layer each having a substantially rectangular shape, and
a short side of the first microwave reception layer and a short side of the second microwave reception layer face each other and are connected to each other via the one or more heat generation layers.

According to Aspect 9, the microwave heating film of Aspect 8 further includes a third microwave reception layer having a substantially rectangular shape,
in which a long side of the third microwave reception layer faces a long side of the first microwave reception layer or a long side of the second microwave reception layer at a distance U,
a short side of the first microwave reception layer and a short side of the second microwave reception layer face each other at a distance V, and
the distance U is twice or more the distance V.

According to Aspect 10, in the microwave heating film of Aspect 2, the first resin film and the second resin film have an arc resistance of 120 seconds or more.

According to Aspect 11, in the microwave heating film of Aspect 2,
the first resin film and the second resin film comprise a resin free of a benzene ring.

According to Aspect 12, a method for manufacturing a microwave heating film includes:
forming a microwave reception layer over a first resin film; and
forming one or more heat generation layers in contact with the microwave reception layer over the first resin film,
the microwave reception layer includes a metallic particle,
a resistivity of the microwave reception layer is 7.0 × 10⁻⁵ Ω·m or less, and
a resistivity of the heat generation layer is 1.6 × 10⁻⁵ Ω·m to 8.0 × 10⁻³ Ω·m.

According to Aspect 13, the method for manufacturing the microwave heating film of Aspect 12 further includes forming a print layer on the first resin film,
with the order of layers from the first resin film being the print layer, the microwave reception layer, and the heat generation layer, and
without the print layer formed on a portion where the microwave reception layer and the one or more heat generation layers are in contact with each other.

Any one of the above-described operations may be performed in various other ways, for example, in an order different from the one described above.

## Claims

1. A microwave heating film (10) comprising:
a first resin film (1);
a microwave reception layer (3) over the first resin film (1), the microwave reception layer (3) including a metallic particle and having a resistivity of 7.0 × 10⁻⁵ Ω·m or less; and
one or more heat generation layers (2) in contact with the microwave reception layer (3), the one or more heat generation layers (2) having a resistivity of 1.6 × 10⁻⁵ Ω·m to 8.0 × 10⁻³ Ω·m.

2. The microwave heating film (10) according to claim 1, further comprising:
a second resin film (7) over the microwave reception layer (3) and the one or more heat generation layers (2).

3. The microwave heating film (10) according to claim 2, wherein the second resin film (7) has at least one of heat sealing finish, water repellent finish, or oil repellent finish on a surface opposite to a surface facing the microwave reception layer (3) and the one or more heat generation layers (2) over the first resin film (1).

4. The microwave heating film (10) according to claim 1 or 2, wherein the first resin film (1) has at least one of heat sealing finish, water repellent finish, or oil repellent finish on a surface over which none of the microwave reception layer (3) and the one or more heat generation layers (2) is disposed.

5. The microwave heating film (10) according to claim 4, wherein the surface of the first resin film (1) having the water repellent finish has a contact angle of 140 degrees or more for water, and the surface of the first resin film (1) having the oil repellent finish has a contact angle of 110 degrees or more for rapeseed oil.

6. The microwave heating film (10) according to claim 1 or 2, wherein the microwave reception layer (3) comprises a mixture of the metallic particle and a resin, and α represented by the following Equation (1) is equal to or more than 1.8 × 10⁻⁴, where D is a thickness of the microwave reception layer (3), R is a volume ratio of the resin to the total of the metallic particle and the resin, and S is an area surrounded by the microwave reception layer (3): $α = D / √ S / R$

7. The microwave heating film (10) according to claim 1 or 2, wherein the microwave reception layer (3) has a hollow structure.

8. The microwave heating film (10) according to claim 1 or 2, wherein the microwave reception layer (3) includes a first microwave reception layer (3A) and a second microwave reception layer (3B) each having a substantially rectangular shape, and
a short side of the first microwave reception layer (3A) and a short side of the second microwave reception layer (3B) face each other and are connected to each other via the one or more heat generation layers (2).

9. The microwave heating film (10) according to claim 8, further comprising a third microwave reception layer (3C) having a substantially rectangular shape,
wherein a long side of the third microwave reception layer (3C) faces a long side of the first microwave reception layer (3A) or a long side of the second microwave reception layer (3B) at a distance U,
a short side of the first microwave reception layer (3A) and a short side of the second microwave reception layer (3B) face each other at a distance V, and
the distance U is twice or more the distance V.

10. The microwave heating film (10) according to claim 2, wherein the first resin film (1) and the second resin film (7) have an arc resistance of 120 seconds or more.

11. The microwave heating film (10) according to claim 2, wherein the first resin film (1) and the second resin film (7) comprise a resin free of a benzene ring.

12. A method for manufacturing a microwave heating film (10), the method comprising:
forming a microwave reception layer (3) over a first resin film (1), the microwave reception layer (3) including a metallic particle and having a resistivity of 7.0 × 10⁻⁵ Ω·m or less; and
forming one or more heat generation layers (2) in contact with the microwave reception layer (3) over the first resin film (1),the one or more heat generation layers (2) having a resistivity of 1.6 × 10⁻⁵ Ω·m to 8.0 × 10⁻³ Ω·m.

13. The method according to claim 12, further comprising:
forming a print layer (4) over the first resin film (1),
with the order of layers from the first resin film (1) being the print layer (4), the microwave reception layer (3), and the one or more heat generation layers (2), and
without the print layer (4) formed on a portion where the microwave reception layer (3) and the one or more heat generation layers (2) are in contact with each other.
